# EUROPEAN PATENT SPECIFICATION

(11) **EP 4 450 204 B1**
(45) Date of publication and mention of the grant of the patent: **20.05.2026**
(21) Application number: 24163342.9
(22) Date of filing: 13.03.2024
(51) Int. Cl.: B23K 9/10

(54) **WELDING POWER SUPPLY DEVICE FOR REDUCING STANDBY POWER**
SCHWEISSSTROMVERSORGUNGSVORRICHTUNG ZUR VERRINGERUNG DER STANDBY-LEISTUNG
DISPOSITIF D'ALIMENTATION ÉLECTRIQUE DE SOUDAGE POUR RÉDUIRE L'ÉNERGIE DE VEILLE

(30) Priority: 27.03.2023 JP 2023049923
(43) Date of publication of application: 23.10.2024
(73) Proprietor: DAIHEN Corporation, Yodogawa-ku Osaka-shi Osaka 532-8512 (JP)
(72) Inventor: Tanaka, Kazuhiro, Osaka-shi, 532-8512 (JP); Horie, Takeru, Osaka-shi, 532-8512 (JP); Shimogiku, Hideki, Osaka-shi, 532-8512 (JP)
(74) Representative: Boult Wade Tennant LLP

(56) References cited:
- US-A1- 2016 129 521

## Description

### FIELD

The present disclosure relates to a welding power supply device for reducing standby power consumption.

### BACKGROUND

In recent efforts to realize a decarbonized society, welding power supply devices are expected to reduce power consumption during standby. One proposed solution is to use an inrush prevention circuit that does not conduct current to the main circuit in a standby state, so that power is not supplied to and consumed by the main circuit during standby (see JP Patent No. 6567223, for example).

Such a conventional welding power supply device, however, continues to generate control power needed for its operation even during standby and is not able to reduce power consumed during standby.

US 2016/129521 A1, on which the preamble of claim 1 is based, discloses a welding power source configured to receive an input power includes a plurality of components and supervising circuitry configurable in a plurality of modes. The plurality of components include power conversion circuitry and background power supply. The supervising circuitry is configured to distribute the input power to the plurality of components based at least in part on a mode of the plurality of modes. The plurality of modes include a welding mode configured to distribute the input power to the power conversion circuitry and to the background power supply. The plurality of modes also include a monitoring mode configured to distribute the input power to the background power supply, and to not distribute the input power to the power conversion circuitry.

### SUMMARY

The present disclosure is to solve the problem noted above and aims to prevent power consumption for generating the control power during standby.

According to a first aspect of the present disclosure, a welding power supply device is provided according to claim 1.

According to a second aspect of the present disclosure, the welding power supply device further includes a power supply generator that receives the alternating-current power supply as an input and provides a control power needed for operation of the mode-switching circuit.

According to a third aspect of the present disclosure, in the welding power supply device, the mode-switching circuit switches the standby mode to the active mode in response to an operation of an inching switch or an operation of a torch switch.

According to a fourth aspect of the present disclosure, in the welding power supply device, the inching switch is provided on a wireless remote control.

According to a fifth aspect of the present disclosure, in the welding power supply device, the wireless remote control includes an receiver that operates on power from the power supply generator.

According to a sixth aspect of the present disclosure, in the welding power supply device, the smoothing circuit is connected to a discharge resistor that is connected to a B contact of the first make-and-break device and a B contact of the second make-and-break device.

The present disclosure makes it possible to prevent power consumption for generating the control power supply during standby.

### DRAWINGS

Fig. 1 is a functional block diagram of a consumable electrode arc welding device according to Embodiment 1 of the present disclosure.
Fig. 2 is a flowchart of processing performed by a mode-switching circuit according to Embodiment 1 of the present disclosure.
Fig. 3 is a timing chart for the case where no inching switch operation or torch switch operation is performed during an active mode according to Embodiment 1.
Fig. 4 is a timing chart for the case where an inching switch operation is performed during a standby mode according to Embodiment 1.
Fig. 5 is a timing chart for the case where a torch switch operation is performed during the standby mode and the active mode according to Embodiment 1.
Fig. 6 is a functional block diagram of a non-consumable electrode arc welding device according to Embodiment 2 of the present disclosure.
Fig. 7 is a functional block diagram of a consumable electrode arc welding device according to Embodiment 3 of the present disclosure.
Fig. 8 is a functional block diagram of a consumable electrode arc welding device according to Embodiment 4 of the present disclosure.
Fig. 9 is a timing chart for the case where no inching switch operation or torch switch operation is performed during an active mode according to Embodiment 4.

### EMBODIMENTS

With reference to the drawings, embodiments of the present disclosure will be described.

### Embodiment 1

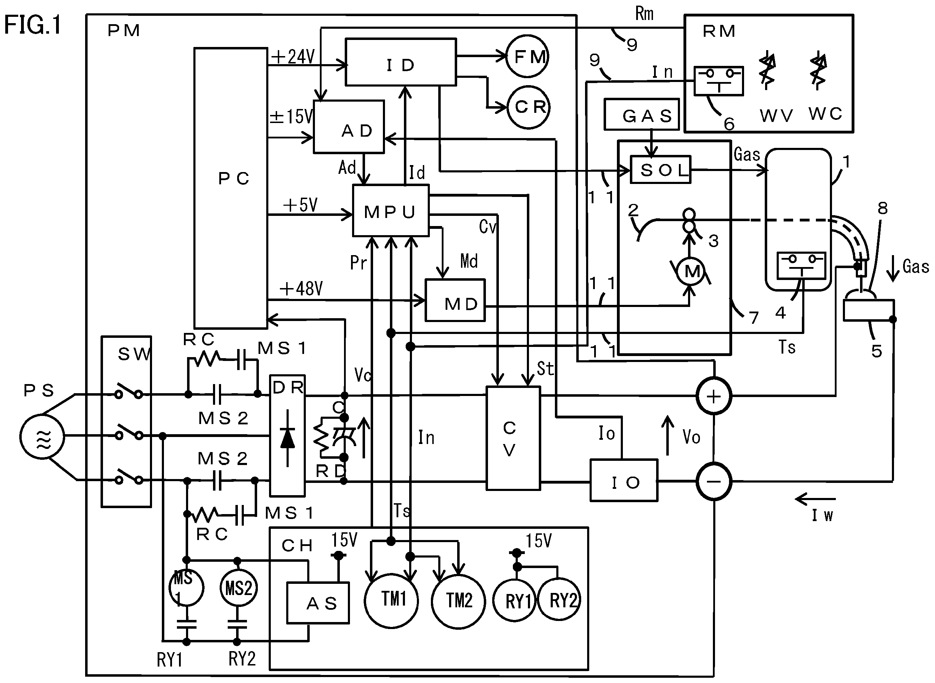

Fig. 1 is a functional block diagram of a consumable electrode arc welding device according to Embodiment 1 of the present disclosure. With reference to the figure, each block will be described below.

The switch SW represents a switch provided on an operation panel of the welding power supply PM. When the switch SW is turned on, the welding power supply PM is powered by the alternating-current (AC) power supply PS.

The rectifying circuit DR rectifies the AC power supply PS to a direct current and outputs the direct current to the smoothing circuit C. As shown in the figure, a make-and-break device MS2 is interposed between the AC power supply PS and the rectifying circuit DR, and a charging resistor RC and a make-and-break device MS1 are also interposed between the AC power supply PS and the rectifying circuit DR. While the make-and-break devices MS1 and MS2 of Embodiment 1 are electromagnetic contactors, other types of switches that can be controlled to open and close may be used. The AC power supply PS is not limited to a three-phase power supply and may be a single-phase power supply.

The smoothing circuit C is a capacitor and smooths the DC power supply received from the rectifying circuit DR to produce a smooth voltage Vc, which is then outputted to a converter circuit CV and a power supply circuit PC. For example, when the AC power supply PS provides three-phase power of 200 V, the smooth voltage Vc will be about 270 to 280 VDC. The discharge resistor RD is connected to the smoothing circuit C for discharging the capacitor.

In accordance with a start signal St and an output command Cv from the microprocessor MPU, the converter circuit CV converts the smooth voltage Vc into the output voltage Vo, which is then applied between the output terminals + and - of the welding power supply PM. Specifically, the converter circuit CV operates as follows.
1) When Start signal St is Low: The converter circuit CV stops operating, so that the output voltage Vo is not applied between the output terminals + and - of the welding power supply PM.
2) When Start signal St is High: The converter circuit CV applies the output voltage Vo responsive to the output command Cv between the output terminals + and - of the welding power supply PM.

The wire feeder 7 feeds the welding wire 2 to the welding torch 1 by rotating the feed rolls 3 coupled to the feed motor **M.** The wire feeder 7 includes a solenoid valve SOL to which a shielding gas source GAS is supplied from a gas cylinder, for example. The solenoid valve SOL is opened and closed by the wire-feeder cable 11 connected to the welding power supply PM. Opening the solenoid valve SOL allows the shielding gas Gas to be emitted from the tip of the welding torch 1 to shield the arc 8 from the atmosphere.

The welding torch 1 is provided with a torch switch 4, and a torch switch signal Ts indicating the operation state of the torch switch 4 is sent to the microprocessor MPU and the mode-switching circuit CH via the wire-feeder cables 11. When the torch switch 4 is open, the torch switch signal Ts is Low, indicating that the welding process is stopped. When the torch switch 4 is pushed and thus closed, the torch switch signal Ts changes to High, indicating that the welding process is being performed.

The remote control RM is connected to the welding power supply PM via a remote-control cable 9. The values of the welding current and the welding voltage are set by operating the welding-current adjustment control WC and the welding-voltage adjustment control WV and outputted as the remote-control set values Rm to the analog circuit AD. The remote control RM also includes an inching switch 6 to be operated for feeding the welding wire 2 to the tip of the welding torch 1. The remote control RM transmits an inching switch signal In that indicates the operation state of the inching switch 6 to the microprocessor MPU and the mode-switching circuit CH via a remote-control cable 9. When the inching switch 6 is open, the inching switch signal In is Low, indicating that the inching process is stopped. When the inching switch 6 is pushed and thus closed, the inching switch signal In changes to High, indicating that the inching process is being performed.

With the smooth voltage Vc supplied from the smoothing circuit C, the power supply circuit PC generates the control power needed for the welding power supply PM to operate and supplies +24 V to the drive circuit ID, ±15 V to the analog circuit AD, +5 V to the microprocessor MPU, and +48 V to the motor drive circuit MD. The power supply circuit PC can be implemented by using a switched-mode power supply that operates with the rated input voltage of about 270 to 280 VDC to provide output voltages of +48 V, +24 V, ±15 V, and +5 V.

The drive circuit ID is supplied with +24 V from the power supply circuit PC as the power supply to operate. In accordance with a drive command Id from the microprocessor MPU, the drive circuit ID performs relevant operations, including driving the fan motor FM for cooling the interior of the welding power supply PM, and opening and closing the relay CR and the solenoid valve SOL for controlling the internal components (not shown) of the welding power supply PM.

The motor drive circuit MD is supplied with +48 V from the power supply circuit PC as the power supply to operate. In accordance with a motor command signal Md from the microprocessor MPU, the motor drive circuit MD rotates the feed motor M to feed the welding wire 2 to the tip of the welding torch 1.

The current detector IO detects the welding current Iw and outputs the welding current value Io as detected to the analog circuit AD.

The analog circuit AD is supplied with ±15 V from the power supply circuit PC as the power supply to operate. The analog circuit AD converts the remote-control set values Rm received from the remote control RM and the welding current value Io received from the current detector IO to the values appropriate for the input level of the microprocessor MPU, and outputs the resulting values to the microprocessor MPU in the form of an analog signal Ad. Additionally, the analog circuit AD processes and converts various other analog signals.

The microprocessor MPU is supplied with +5 V from the power supply circuit PC as the power supply and operates as follows in accordance with an analog signal Ad from the analog circuit AD, an inching switch signal In from the remote control RM, a torch switch signal Ts from the torch switch 4, and a permission signal Pr from the mode-switching circuit CH.
1) When Permission signal Pr is Low: The microprocessor MPU does nothing regardless of the levels of the inching switch signal In and the torch switch signal Ts.
2) When Permission signal Pr is High and Inching switch signal In is High: The microprocessor MPU outputs a command signal Md to the motor drive circuit MD based on the analog signal Ad received from the analog circuit AD, for causing the feed motor M to rotate to feed the welding wire 2 to the tip of the welding torch 1.
3) When Permission signal Pr is High and Torch switch signal Ts is High: The microprocessor MPU outputs a command signal Md to the motor drive circuit MD based on the analog signal Ad received from the analog circuit AD, and also outputs a drive command Id for driving the internal components of the welding power supply PM and the solenoid valve SOL that are necessary to start welding. The microprocessor MPU also outputs an output command Cv to the converter circuit CV based on the analog signal Ad received from the analog circuit AD and switches the start signal St from Low to High. This causes the output voltage Vo to be applied between the output terminals + and - of the welding power supply PM.

The mode-switching circuit CH is powered by the AC power supply PS and generates, at the power supply generator AS, the control power of 15 V needed for operation of the mode-switching circuit CH. The relays RY1 and RY2 operate on the control power supply of 15 V generated by the power supply generator AS. The relays RY1 and RY2 are driven by a command (not shown) from the mode-switching circuit CH to energize the operation coils of the make-and-break devices MS1 and MS2. As a result, the make-and-break devices MS1 and MS2 are switched from the open state to the closed state. The mode-switching circuit CH includes a timer TM1 for measuring a first time period and a timer TM2 for measuring a second time period. The mode-switching circuit CH receives an inching switch signal In and a torch switch signal Ts as its inputs, switches the permission signal Pr between Low indicating a standby mode and High indicating an active mode, and outputs the permission signal Pr to the microprocessor MPU.

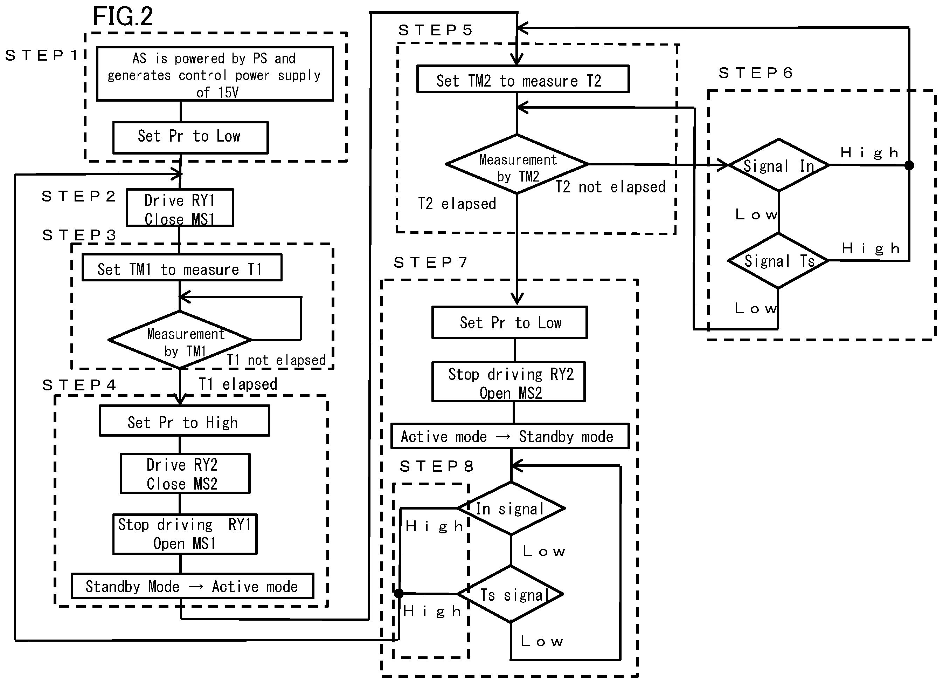

Fig. 2 is a flowchart showing processing performed by the mode-switching circuit CH. The following description is given with reference to the figure. Note that STEPs 1 to 8 refer to the numbers each given to one or more processing steps enclosed in the dotted boxes.
(1) STEP 1: The switch SW is turned on, so that the power supply generator AS is supplied with power from the AC power supply PS. When the power supply generator AS generates the control power of 15 V needed for operation of the mode-switching circuit CH, the mode-switching circuit CH sets the permission signal Pr to Low.
(2) STEP 2: The mode-switching circuit CH drives the relay RY1 to energize the operation coil of the make-and-break device MS1 and thus to close the make-and-break device MS1. As a result, the smoothing circuit C begins charging with the current limited by the charging resistor RC.
(3) STEP 3: The timer TM1 is set to measure the first time period T1 and started. The timer TM1 continues the measurement if the first time period T1 has not elapsed.
(4) STEP 4: When the timer TM1 reaches the first time period T1, the mode-switching circuit CH switches the permission signal Pr from Low to High. The mode-switching circuit CH drives the relay RY2 to energize the operation coil of the make-and-break device MS2 and thus to close the make-and-break device MS2. In addition, the mode-switching circuit CH stops driving the relay RY1 to stop energizing the operation coil of the make-and-break device MS1 and thus to open the make-and-break device MS1. In this state, the smoothing circuit C is powered by the AC power supply PS directly through the contact of the make-and-break device MS2 and the rectifying circuit DR and switched from the standby mode to the active mode for enabling welding.
(5) STEP 5: The timer TM2 is set to measure the second time period T2 and started.
(6) STEP 6: The timer TM2 keeps the measurement if the second time period T2 is not elapsed and both the inching switch signal In and the torch switch signal Ts are Low. When at least either the inching switch signal In or the torch switch signal Ts is High, the processing goes back to STEP 5 to set the second timer TM2 to measure the second time period T2 and start the timer TM2 again.
(7) STEP 7: When the timer TM2 reaches the second time period T2, the mode-switching circuit CH switches the permission signal Pr from High to Low. The mode-switching circuit CH stops driving the relay RY2 to stop energizing the operation coil of the make-and-break device MS2 and thus to open the make-and-break device MS2. In this state, the smoothing circuit C is disconnected from the AC power supply PS, so that the smoothing circuit C is discharged through the discharge resistor RD to be switched to the standby mode for reducing power consumption. STEP 7 is continued if both the inching switch signal In and the torch switch signal Ts are Low.
(8) STEP 8: When at least either of the inching switch signal In and the torch switch signal Ts becomes High during the standby mode in STEP 7, the processing goes back to STEP 2 to repeat the processing steps up to STEP 4, so that the mode is switched to the active mode for enabling welding.

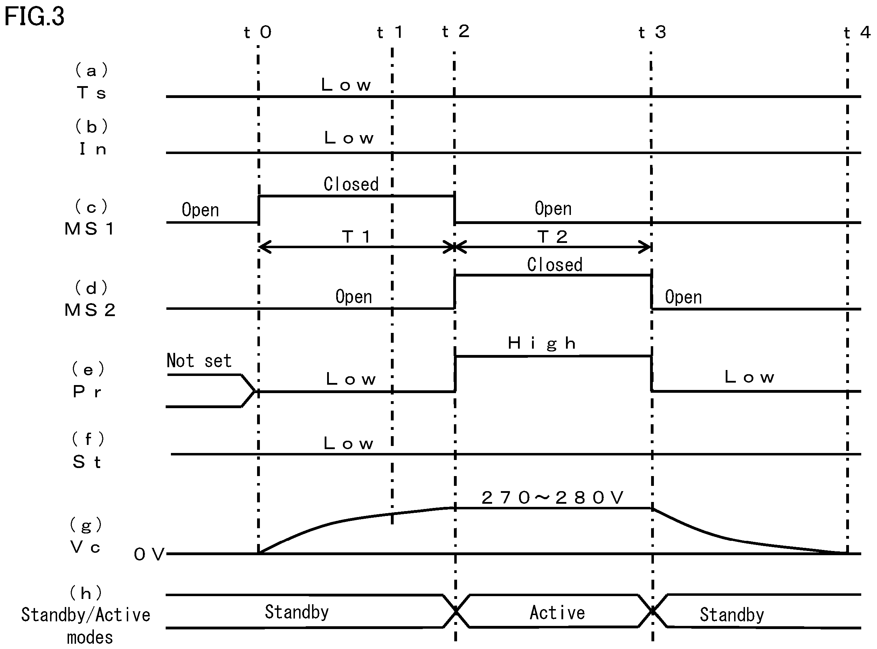

Fig. 3 is a timing chart for the case where no inching switch operation or torch switch operation is performed during the active mode according to Embodiment 1. Section (a) of the figure shows the torch switch signal Ts, (b) shows the inching switch signal In, (c) shows the open/close of the make-and-break device MS1, (d) shows the open/close of the make-and-break device MS2, (e) shows the permission signal Pr, (f) shows the start signal St, (g) shows the smooth voltage Vc, and (h) shows whether the current mode is the standby mode or the active mode. With reference to this figure, the following describes the processing of Embodiment 1 in the case where no inching switch operation or torch switch operation is performed during the active mode.

Time t0: Time t0 is when the welding power supply PM is powered by the AC power supply PS in response to the operation to turn on the switch SW, and the power supply generator AS of the mode-switching circuit CH generates the control power supply of 15 V needed for operation of the mode-switching circuit CH. Then, the mode-switching circuit CH sets the permission signal Pr to Low as shown in Section (e) of Fig. 3, drives the relay RY1 to energize the operation coil of the make-and-break device MS1. As a result, the make-and-break device MS1 is switched from the open state to the closed state as shown in Section (c) of Fig. 3. In this state, the smoothing circuit C is charged with the AC power supply PS through the rectifying circuit DR via the make-and-break device MS1 and the charging resistor RC. Thus, the smooth voltage Vc across the smoothing circuit C gradually increases from 0 V, as shown in Section (g) of Fig. 3. At time t0, in addition, the timer TM1 is started.

Time t1: As shown in Section (g) of Fig. 3, the smooth voltage Vc across the smoothing circuit C increases and reaches at time t1 to a level sufficient as an input for the power supply circuit PC to produce voltages of +48 V, +24 V, ±15 V, and +5 V. The power supply circuit PC outputs +24 V to the drive circuit ID, ±15 V to the analog circuit AD, +5 V to the microprocessor MPU, and +48 V to the motor drive circuit MD.

Time t2: At time t2 when the first time period T1 set on the timer TM1 elapses from time t0, the mode-switching circuit CH stops driving the relay RY1 and starts driving the relay RY2. Consequently, the make-and-break device MS1 opens as shown in Section (c) of Fig. 3, and the make-and-break device MS2 closes as shown in Section (d) of Fig. 3. When the make-and-break device MS2 is closed, the smoothing circuit C is charged with the AC power supply PS directly through the rectifying circuit DR. With the AC power supply PS of 200 VAC, the smoothing circuit C is charged to the smooth voltage Vc of 270 to 280 V as shown in Section (g) of Fig. 3. The mode-switching circuit CH switches the permission signal Pr from Low to High as shown in Section (e) of Fig. 3. This causes the microprocessor MPU to switch to the active mode as shown in Section (h) of Fig. 3, in which the inching process or the welding process can be started in accordance with the inching switch signal In or the torch switch signal Ts. At time t2, in addition, the timer TM2 is started. The first time period T1 may be set to 2 seconds or so, which should be long enough for the smoothing circuit C to be charged to about 270 to 280 V with the AC power supply PS through the charging resistor RC. The length of the first time period T1, however, can be set as appropriate in the art in view of the resistance value of the charging resistor RC and the capacitance of the smoothing circuit C. It is not necessary to detect the smooth voltage Vc across the smoothing circuit C to determine the length of the time t2. The timing to open the make-and-break device MS1 is not limited to at time t2. The make-and-break device MS1 can be opened any time from time t2 to time t3 during which the make-and-break device MS2 is closed.

Time t3: At time t3 when the second time period T2 set on the timer TM2 elapses from time t2, the torch switch signal Ts and the inching switch signal In are not switched from Low to High as shown in Sections (a) and (b) of Fig. 3. The mode-switching circuit CH thus switches the permission signal Pr from High to Low as shown in Section (e) of Fig. 3 and stops driving the relay RY2 to open the make-and-break device MS2. As a result of opening the make-and-break device MS2, the power from the AC power supply PS to the rectifying circuit DR is stopped. Then, the smooth voltage Vc across the smoothing circuit C is discharged to the discharge resistor RD and the power supply circuit PC and gradually decreases as shown in Section (g) of Fig. 3, and the mode is switched to the standby mode as shown in Section (h) of Fig. 3. The second time period T2 may be set to 10 to 20 minutes or so, which should be long enough for the fan motor FM to sufficiently cool the temperatures of the internal components of the welding power supply PM raised during the welding operation. In the case where no welding current Iw is passed during the active mode from time t2 to time t3, the length of second time period T2 can be shorter as the temperatures of the internal components of the welding power supply PM may be relatively low.

Time t4: At time t4, the smooth voltage Vc is fully discharged and becomes 0 v as shown in Section (g) of Fig. 3. At some point between time t3 and time t4 during which the smooth voltage Vc decreases, the power supply circuit PC operating on the smooth voltage Vc supplied from the smoothing circuit C becomes unable to output the voltages of +48 V, +24 V, ±15 V, and +5 V, so that the drive circuit ID, the analog circuit AD, the microprocessor MPU, and the drive circuit MD stop operating. That is, after time t3 at which the mode is switched to the standby mode, the only power consumed by the welding power supply PM is that consumed by the power supply generator AS for generating the power needed for operation of the mode-switching circuit CH. Specifically, the power consumption is reduced to 10 W or less (about 15 V and 0.5 A, for example).

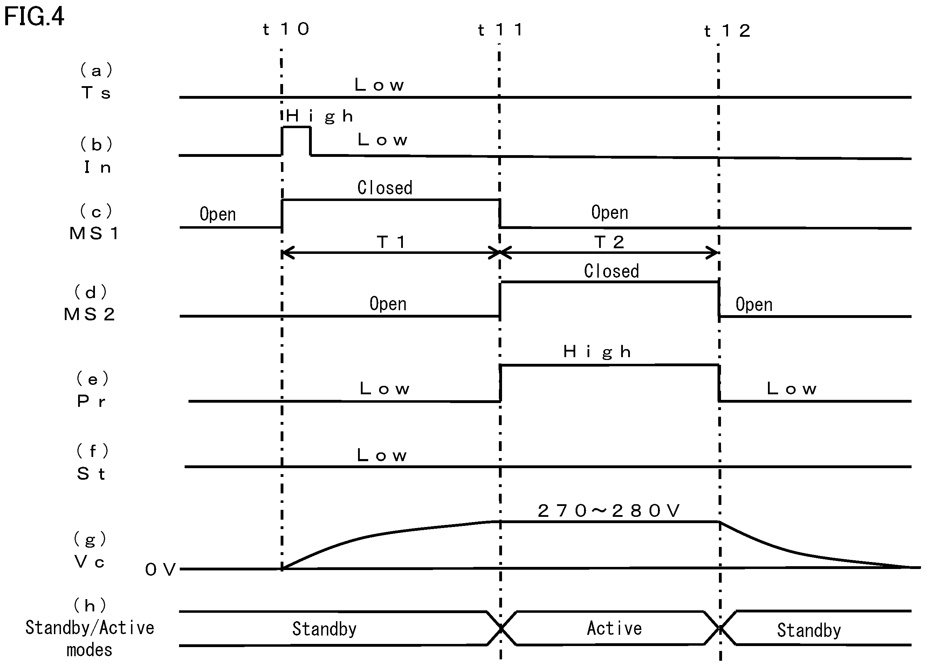

Fig. 4 is a timing chart for the case where an inching switch operation is performed during the standby mode according to Embodiment 1. Section (a) of the figure shows the torch switch signal Ts, (b) shows the inching switch signal In, (c) shows the open/close of the make-and-break device MS1, (d) shows the open/close of the make-and-break device MS2, (e) shows the permission signal Pr, (f) shows the start signal St, (g) shows the smooth voltage Vc, and (h) shows whether the current mode is the standby mode or the active mode. With reference to this figure, the following describes the processing of Embodiment 1 in the case where an inching switch operation is performed during the standby mode.

Time t10: At time t10, the inching switch 6 is operated, and the inching switch signal In is switched from Low to High as shown in Section (b) of Fig. 4. The mode-switching circuit CH sets the permission signal Pr to Low as shown in Section (e) of Fig. 4, drives the relay RY1 to energize the operation coil of the make-and-break device MS1. As a result, the make-and-break device MS1 is switched from the open state to the closed state as shown in Section (c) of Fig. 4. The smoothing circuit C is charged with the AC power supply PS through the rectifying circuit DR via the make-and-break device MS1 and the charging resistor RC. Thus, the smooth voltage Vc across the smoothing circuit C gradually increases from 0 V, as shown in Section (g) of Fig. 4. At time t10, in addition, the timer TM1 is started.

Time t11: At time t11 when the first time period T1 set on the timer TM1 elapses from time t10, the mode-switching circuit CH stops driving the relay RY1 and starts driving the relay RY2. Consequently, the make-and-break device MS1 opens as shown in Section (c) of Fig. 4, and the make-and-break device MS2 closes as shown in Section (d) of Fig. 4. When the make-and-break device MS2 is closed, the smoothing circuit C is charged with the AC power supply PS directly through the rectifying circuit DR. Thus, with the AC power supply PS of 200 VAC, the smoothing circuit C is charged to the smooth voltage Vc of 270 to 280 V as shown in Section (g) of Fig. 4. The mode-switching circuit CH switches the permission signal Pr from Low to High as shown in Section (e) of Fig. 4, and the mode is switched to the active mode as shown in Section (h) of Fig. 4. At time t11, in addition, the timer TM2 is started.

Time t11 to t12: From time t11 to time t12 at which the second time period T2 set on the timer TM2 elapses, the torch switch signal Ts and the inching switch signal In are not switched from Low to High as shown in Sections (a) and (b) of Fig. 4. The mode-switching circuit CH thus switches the permission signal Pr from High to Low as shown in Section (e) of Fig. 4 and stops driving the relay RY2 to open the make-and-break device MS2. As a result of opening the make-and-break device MS2, the power from the AC power supply PS to the rectifying circuit DR is stopped. Then, the smooth voltage Vc across the smoothing circuit C is discharged to the discharge resistor RD and the power supply circuit PC and gradually decreases as shown in Section (g) of Fig. 4, and the mode is switched to the standby mode as shown in Section (h) of Fig. 4.

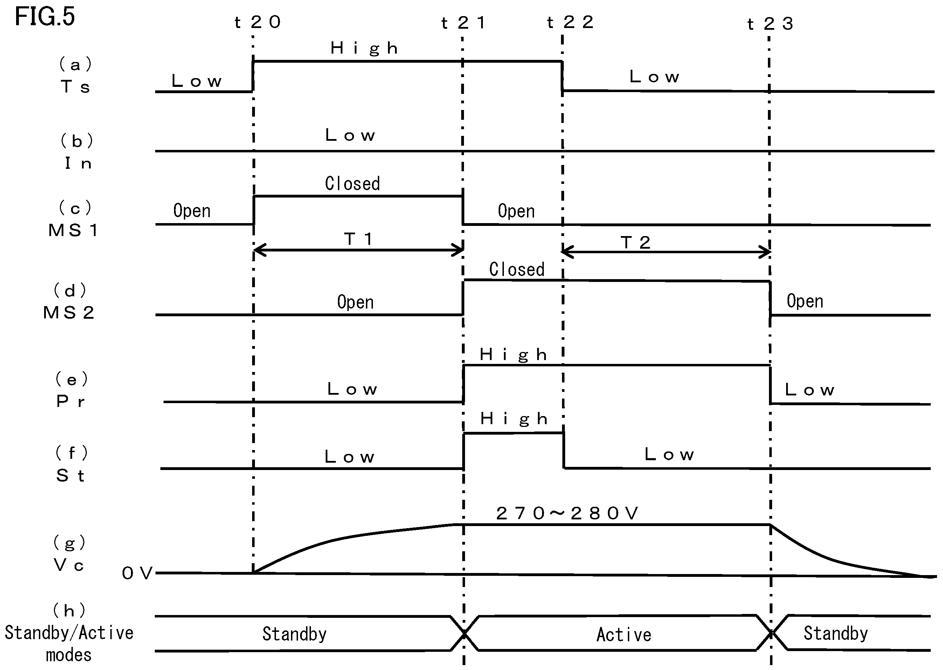

Fig. 5 is a timing chart for the case where a torch switch operation is performed during the standby mode and the active mode according to Embodiment 1. Section (a) of the figure shows the torch switch signal Ts, (b) shows the inching switch signal In, (c) shows the open/close of the make-and-break device MS1, (d) shows the open/close of the make-and-break device MS2, (e) shows the permission signal Pr, (f) shows the start signal St, (g) shows the smooth voltage Vc, and (h) shows whether the current mode is the standby mode or the active modes. With reference to this figure, the following describes the processing of Embodiment 1 in the case where a torch switch operation is performed during the standby mode and the active mode.

Time t20: At time t20, the torch switch 4 is operated, and the torch switch signal Ts is switched from Low to High as shown in Section (a) of Fig. 5. The mode-switching circuit CH sets the permission signal Pr to Low as shown in Section (e) of Fig. 5, drives the relay RY1 to energize the operation coil of the make-and-break device MS1. As a result, the make-and-break device MS1 is switched from the open state to the closed state as shown in Section (c) of Fig. 5. The smoothing circuit C is charged with the AC power supply PS through the rectifying circuit DR via the make-and-break device MS1 and the charging resistor RC. Thus, the smooth voltage Vc across the smoothing circuit C gradually increases from 0 V as shown in Section (g) of Fig. 5. At time t20, in addition, the timer TM1 is started.

Time t21: At time t21 when the first time period T1 set on the timer TM1 elapses from time t20, the mode-switching circuit CH stops driving the relay RY1 and starts driving the relay RY2. Consequently, the make-and-break device MS1 opens as shown in Section (c) of Fig. 5, and the make-and-break device MS2 closes as shown in Section (d) of Fig. 5. When the make-and-break device MS2 is closed, the smoothing circuit C is charged with the AC power supply PS directly through the rectifying circuit DR. Thus, with the AC power supply PS of 200 VAC, the smoothing circuit C is charged to the smooth voltage Vc of 270 to 280 V as shown in Section (g) of Fig. 5. The mode-switching circuit CH switches the permission signal Pr from Low to High as shown in Section (e) of Fig. 5, and the mode is switched to the active mode as shown in Section (h) of Fig. 5. At time t21, the permission signal Pr is High and the torch switch signal Ts is also High as shown in Section (a) of Fig. 5. Thus, the microprocessor MPU switches the start signal St from Low to High as shown in Section (f) of Fig. 5, and the converter section CV applies the output voltage Vo responsive to the output command Cv between the output terminals + and - of the welding power supply PM to start welding.

Time t22: At time t22, the torch switch signal Ts is switched from High to Low as shown in Section (a) of Fig. 5. The microprocessor MPU switches the start signal St from High to Low as shown in Section (f) of Fig. 5, and the converter section CV stops the output applied between the output terminals + and - of the welding power supply PM. At time t22 when the torch switch signal Ts is switched to Low, the timer TM2 is started.

Time t23: At time t23 when the second time period T2 set on the timer TM2 elapses from time t22, the torch switch signal Ts and the inching switch signal In are not switched from Low to High as shown in Sections (a) and (b) of Fig. 5. The mode-switching circuit CH thus switches the permission signal Pr from High to Low as shown in Section (e) of Fig. 5 and stops driving the relay RY2 to open the make-and-break device MS2. As a result of opening the make-and-break device MS2, the power from the AC power supply PS to the rectifying circuit DR is stopped. Then, the smooth voltage Vc across the smoothing circuit C is discharged to the discharge resistor RD and the power supply circuit PC and gradually decreases as shown in Section (g) of Fig. 5, and the mode is switched to the standby mode as shown in Section (h) of Fig. 5.

### Embodiment 2

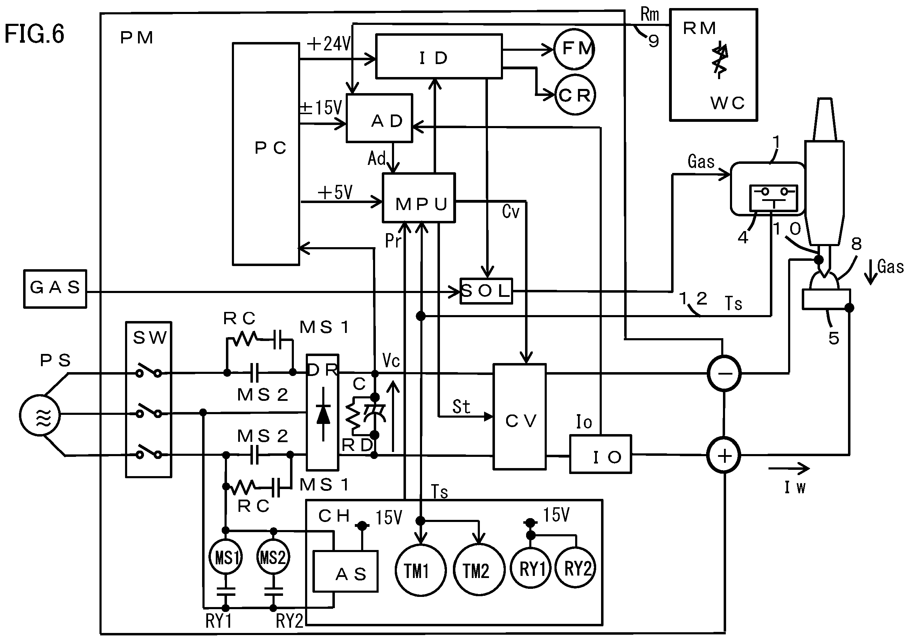

Fig. 6 is a functional block diagram of a non-consumable electrode arc welding device according to Embodiment 2 of the present disclosure. With reference to Fig. 6, the following only describes processing different from that of Embodiment 1.

The non-consumable electrode arc welding device does not involve feeding the welding wire 2 to the tip of the welding torch 1. Thus, the wire feeder 7 is not necessary, and the inching switch 6 on the remote control RM is not necessary. For the non-consumable electrode arc welding device, in addition, setting the welding current Iw is sufficient, and setting the welding voltage Iv is not necessary. Thus, the welding-voltage adjustment control WV on the remote control RM is not necessary.

In accordance with a start signal St and an output command Cv from the microprocessor MPU, the converter section CV outputs the welding current Iw that flows from the output terminal + to the output terminal - of the welding power supply PM, causing an arc 8 to be generated between the electrode 10 disposed at the tip of the welding torch 1 and the matrix material 5. The mechanism driver ID opens the solenoid valve SOL included in the welding power supply PM, so that the shielding gas Gas supplied from the shielding gas source GAS to the solenoid valve SOL is emitted from the tip of the torch 1 to protect the arc 8 from the atmosphere.

As the device according to Embodiment 2 does not include the inching switch 6, switching from the standby mode to the active mode cannot be triggered by an inching switch operation. However, the torch switch 4 of the welding torch 1 is connected to the welding power supply PM by the torch-switch cable 12, so that switching from the standby mode to the active mode can be triggered by operating the torch switch 4 as is clear from Fig. 5.

### Embodiment 3

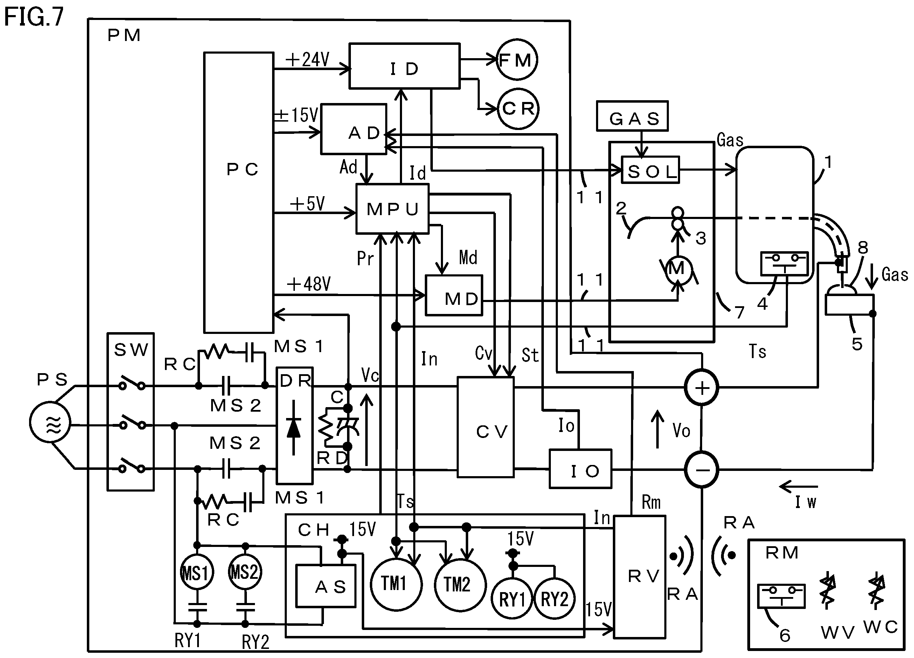

Fig. 7 is a functional block diagram of a consumable electrode arc welding device according to Embodiment 3 of the present disclosure. With reference to Fig. 7, the following only describes processing different from that of Embodiment 1.

The remote control RM is connected to the welding power supply PM via a radio signal RA, rather than via the remote-control cable 9. The remote control RM is powered by a built-in battery (not shown) and communicates with a receiver RV of the welding power supply PM using a radio signal RA to send the inching switch signal In and the remote-control set values Rm to the welding power supply PM.

The receiver RV is powered by the voltage of 15 V generated by the power supply generator AS in the mode-switching circuit CH and stays in communication with the remote control RM even during the standby mode. The receiver RV can thus operate in response to an inching switch signal In from the remote control RM to return to the active mode from the standby mode.

Embodiment 3 not including the remote-control cable 9 eliminates the need for troublesome cable handling during work. In addition, Embodiment 3 allows the inching switch 6 on the remote control RM to be operated to switch the mode from the standby mode to the active mode at a location remote from the welding power supply PM without the need to extend the length of the remote-control cable 9.

### Embodiment 4

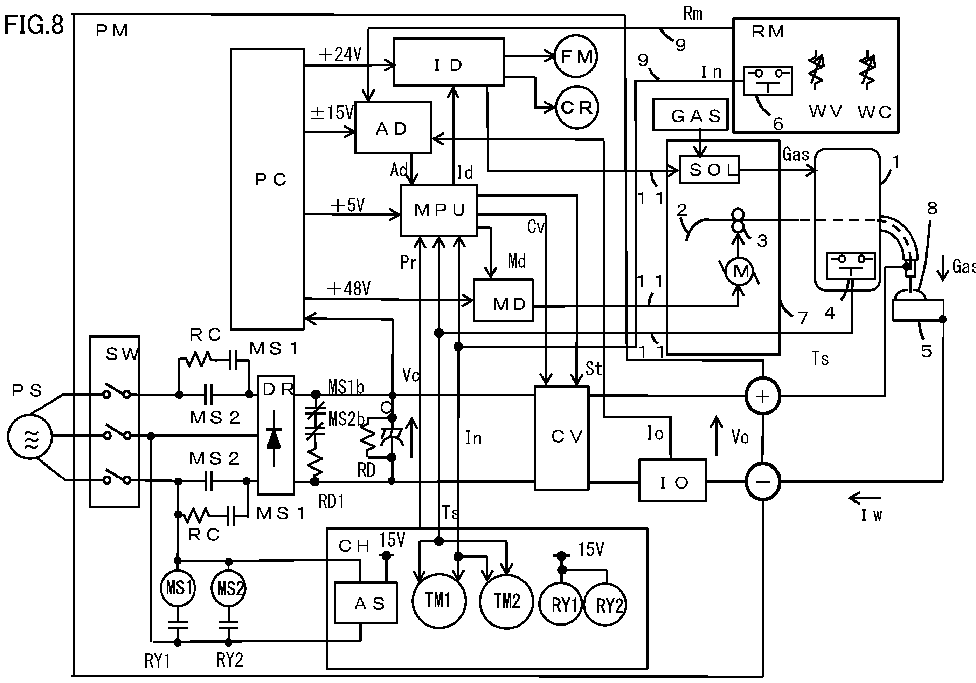

Fig. 8 is a functional block diagram of a consumable electrode arc welding device according to Embodiment 4 of the present disclosure. With reference to Fig. 8, the following only describes processing different from that of Embodiment 1.

The smoothing circuit C is connected to the discharge resistor RD and additionally to a discharge resistor RD1 that is connected to the make-and-break devices MS1b and MS2b, which are B contacts (back contacts) of the make-and-break devices MS land MS2, respectively. Hence, the discharge resistor RD1 is connected to the smoothing circuit C for discharging the smoothing circuit C only when the make-and-break devices MS1b and MS2b are closed, i.e., when the make-and-break devices MS1 and MS2 are open.

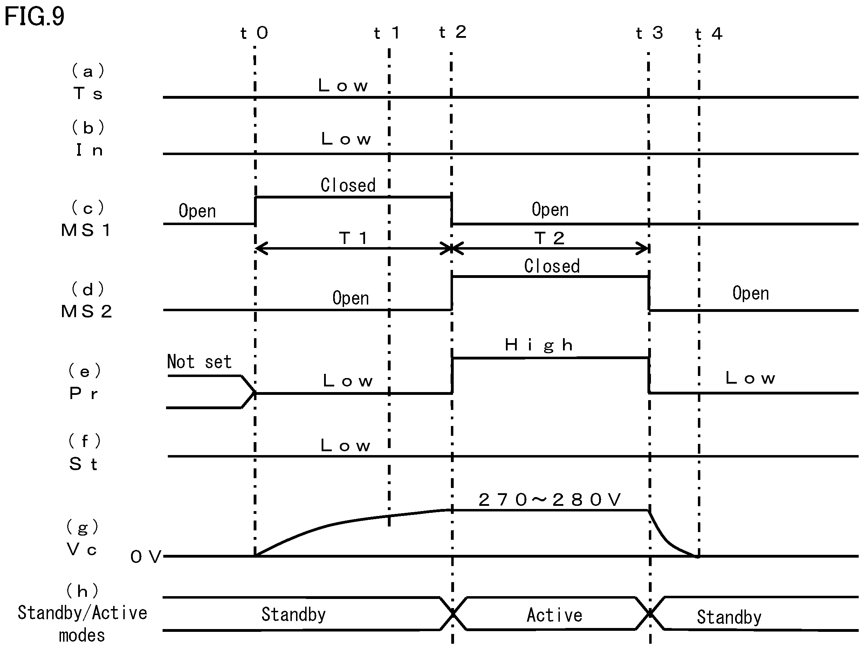

Fig. 9 is a timing chart for the case where no inching switch operation or torch switch operation is performed during the active mode according to Embodiment 4. In the figure, the section (a) shows the torch switch signal Ts, (b) shows the inching switch signal In, (c) shows the open/close of the make-and-break device MS1, (d) shows the open/close of the make-and-break device MS2, (e) shows the permission signal Pr, (f) shows the start signal St, (g) shows the smooth voltage Vc, and (h) shows whether the current mode is the standby mode or the active mode. With reference to Fig. 9, the following only describes processes after time t3, which differ from those of Embodiment 1.

Time t3: At time t3 when the second time period T2 set on the timer TM2 elapses from time t2, the torch switch signal Ts and the inching switch signal In are not switched from Low to High as shown in Sections (a) and (b) of Fig. 9. Consequently, the mode-switching circuit CH switches the permission signal Pr from High to Low as shown in Section (e) of Fig. 9 and stops driving the relay RY2 and thus to open the make-and-break device MS2. As a result of opening the make-and-break device MS2, the power from the AC power supply PS to the rectifying circuit DR is stopped. Then, the smooth voltage Vc across the smoothing circuit C is discharged to the discharge resistor RD and the power supply circuit PC and gradually decreases as shown in Section (g) of Fig. 9, and the mode is switched to the standby mode as shown in Section (h) of Fig. 9. After time t3, the make-and-break devices MS1 and MS2 are open as shown in Sections (c) and (d) of Fig. 9, and thus the make-and-break devices MS1b and MS2b are closed. In this state, the discharge resistor RD1 is connected in parallel to the smoothing circuit C. In Embodiment 4 as compared with Embodiment 1, the smooth voltage Vc is at a faster rate discharged as shown in Section (g) of Fig. 9, and it takes shorter to reach the time t4 at which the smooth voltage Vc becomes 0 V.

Embodiment 4 can implement a self-discharging means of reducing the discharge resistance value upon switching from the active mode to the standby mode for ensuring that the smooth voltage Vc across the smoothing circuit C is discharged to 60 V or less within a time period during which human contact is possible, as required by the standards for the input capacitors of welding power supplies (e.g., by JIS C9300-1: Arc welding equipment, 6.2.3: Self-discharge of Input Capacitor). In addition, the discharge resistor RD1 is not connected to the smoothing circuit C during the first time period T1 where the make-and-break device MS1 is closed and the make-and-break device MS2 is open to allow the smoothing circuit C to be charged through the charging resistor RC and also during the active mode where the make-and-break device MS2 is closed. This prevents a loss of power at the discharge resistor RD1.

Embodiments 1 to 4 of the present disclosure can reduce the smooth voltage Vc across the smoothing circuit C to 0 V during the standby mode, and 55 W consumed by the power supply circuit PC and 10 W consumed by the discharge resistor RD even during the standby mode is reduced to 10 W or less needed for the mode-switching circuit. In addition, Embodiment 4 can meet the self-discharging standards required for input capacitors.

The embodiments described above are exemplary only and not are not to be construed as limitations. The scope of the present disclosure is defined by appending claims.

**REFERENCE NUMERALS**

| | | | |
|---|---|---|---|
| 1: | Welding torch | 2: | Welding wire |
| 3: | Feed roll | 4: | Torch switch |
| 5: | Matrix material | 6: | Inching switch |
| 7: | Wire feeder | 8: | Arc |
| 9: | Remote-control cable | 10: | Electrode |
| 11: | Wire-feeder cable | 12: | Torch-switch cable |
| +, -: | Output terminal | AD: | Analog circuit |
| Ad: | Analog signal | AS: | Power supply generator |
| C: | Smoothing circuit | CH: | Mode-switching circuit |
| CR: | Relay | CV: | Converter circuit |
| Cv: | Output command | DR: | Rectifying circuit |
| FM: | Fan motor | GAS: | Shielding gas source |
| Gas: | Shielding gas | ID: | Mechanism driver |
| Id: | Drive command | In: | Inching switch signal |
| Iw: | Welding current | M: | Feed motor |
| MD: | Motor drive section | Md: | Motor command |
| MPU: | Microprocessor | MS1, MS2: | Make-and-break device |
| MS1b, MS2b: | Make-and-break device (B contact, back contact) | | |
| PC: | Power supply circuit | PS: | AC power supply |
| PM: | Welding power supply | Pr: | Permission signal |
| RC: | Charging resistor | RD: | Discharging resistor |
| RD1: | Discharging resistor | RY1, RY2: | Relay |
| RM: | Remote control | Rm: | Remote-control set value |
| SOL: | Solenoid valve | St: | Start signal |
| SW: | Switch | TM1, TM2: | Timer |
| Ts: | Torch switch signal | Vc: | Smooth voltage |
| Vo: | Output voltage | | |
| WC: | Welding-current adjustment control | | |
| WV: | Welding-voltage adjustment control | | |

## Claims

1. A welding power supply device comprising:
a rectifying circuit (DR) that rectifies an alternating-current power;
a smoothing circuit (C) that smooths an output of the rectifying circuit (DR) to a direct-current voltage;
a power supply circuit (PC) that receives as an input the direct-current voltage from the smoothing circuit (C) to generate a control power needed for operation of the welding power supply device;
a converter circuit (CV) that converts the direct-current voltage from the smoothing circuit (C) into an output of the welding power supply device;
and a
**characterised in that** the welding power supply device further comprises:
a first make-and-break device (MS1) that opens and closes a connection of the alternating-current power to the rectifying circuit (DR);
a charging resistor (RC);
a second make-and-break device (MS2) that connects the charging resistor (RC) to the first make-and-break device (MS1);
mode-switching circuit (CH) for switching between a standby mode in which the welding power supply device reduces power consumption and an active mode in which the welding power supply device operates to enable welding,
wherein, for switching the standby mode to the active mode, the mode-switching circuit (CH) keeps the first make-and-break device (MS1) closed for a first time period to allow the smoothing circuit (C) to be charged with a current limited by the charging resistor (RC), and
after the first time period elapses, the mode-switching circuit (CH) closes the second make-and-break device (MS2) and opens the first make-and-break device (MS1) to disconnect the charging resistor (RC) from the first make-and-break device (MS1), whereby the mode is switched to the active mode, and
for switching the active mode to the standby mode, the mode-switching circuit (CH) opens the second make-and-break device (MS2) to stop charging the smoothing circuit (C), whereby the mode is switched to the standby mode.

2. The welding power supply device according to claim 1, further comprising a power supply generator (AS) that receives the alternating-current power as an input and provides a control power needed for operation of the mode-switching circuit (CH).

3. The welding power supply device according to claim 2, wherein the mode-switching circuit (CH) switches the standby mode to the active mode in response to an operation of an inching switch (6) or an operation of a torch switch (4).

4. The welding power supply device according to claim 3, wherein the inching switch (6) is provided on a wireless remote control (RM) .

5. The welding power supply device according to claim 4, wherein the wireless remote control (RM) includes a receiver that operates on power from the power supply generator (AS).

6. The welding power supply device according to any one of claims 1 to 5, wherein the smoothing circuit (C) is connected to a discharge resistor (RD1) that is connected to a back contact of the first make-and-break device (MS1b) and a back contact of the second make-and-break device (MS2b).

## Patentansprüche

1. Schweißstromversorgungsvorrichtung, umfassend:
eine Gleichrichterschaltung (DR), die eine Wechselstromversorgung gleichrichtet;
eine Glättungsschaltung (C), die den Ausgang der Gleichrichterschaltung (DR) zu einer Gleichspannung glättet;
eine Stromversorgungsschaltung (PC), die als Eingang die Gleichspannung von der Glättungsschaltung (C) empfängt, um eine für den Betrieb der Schweißstromversorgungsvorrichtung erforderliche Steuerspannung zu erzeugen;
eine Wandlerschaltung (CV), die die Gleichspannung von der Glättungsschaltung (C) in einen Ausgang der Schweißstromversorgungsvorrichtung umwandelt;
und eine
Modusumschalt-Schaltung (CH) zum Umschalten zwischen einem Standby-Modus, in dem die Schweißstromversorgung den Stromverbrauch reduziert, und einem aktiven Modus, in dem die Schweißstromversorgung so arbeitet, dass Schweißen ermöglicht wird,
**dadurch gekennzeichnet, dass** die Schweißstromversorgungseinrichtung ferner umfasst:
eine erste Unterbrechervorrichtung (MS1), die eine Verbindung der Wechselstromversorgung mit der Gleichrichterschaltung (DR) öffnet und schließt;
einen Ladewiderstand (RC);
eine zweite Unterbrechervorrichtung (MS2), die den Ladewiderstand (RC) mit der ersten Schaltvorrichtung (MS1) verbindet;
wobei zum Umschalten vom Standby-Modus in den aktiven Modus die Modusumschalt-Schaltung (CH) die erste Unterbrechervorrichtung (MS1) für eine erste Zeitspanne geschlossen hält, damit die Glättungsschaltung (C) mit einem durch den Ladewiderstand (RC) begrenzten Strom aufgeladen werden kann, und
nach Ablauf der ersten Zeitspanne schließt die Modusumschalt-Schaltung (CH) die zweite Unterbrechervorrichtung (MS2) und öffnet die erste Unterbrechervorrichtung (MS1), um den Ladewiderstand (RC) von der ersten Unterbrechervorrichtung (MS1) zu trennen,
wodurch in den aktiven Modus umgeschaltet wird, und
um den aktiven Modus in den Standby-Modus umzuschalten, öffnet die Modusumschalt-Schaltung (CH) die zweite Unterbrechervorrichtung (MS2), um das Laden der Glättungsschaltung (C) zu beenden, wodurch der Modus in den Standby-Modus umgeschaltet wird.

2. Schweißstromversorgungsvorrichtung nach Anspruch 1, ferner umfassend einen Stromversorgungsgenerator (AS), der die Wechselstromleistung als Eingangssignal empfängt und eine für den Betrieb der Modusumschalt-Schaltung (CH) erforderliche Steuerstromversorgung bereitstellt.

3. Schweißstromversorgungsvorrichtung nach Anspruch 2, wobei die Modusumschalt-Schaltung (CH) als Reaktion auf die Betätigung eines Tippschalters (6) oder eines Brennerschalters (4) vom Standby-Modus in den aktiven Modus umschaltet.

4. Schweißstromversorgungsvorrichtung nach Anspruch 3, wobei der Tippschalter (6) an einer drahtlosen Fernbedienung (RM) vorgesehen ist.

5. Schweißstromversorgungsvorrichtung nach Anspruch 4, wobei die drahtlose Fernbedienung (RM) einen Empfänger umfasst, der mit Strom aus dem Stromversorgungsgenerator (AS) betrieben wird.

6. Schweißstromversorgungseinrichtung nach einem der Ansprüche 1 bis 5, wobei die Glättungsschaltung (C) mit einem Entladungswiderstand (RD1) verbunden ist, der mit einem Rückkontakt (MS1b) der ersten Unterbrechervorrichtung und einem Rückkontakt (MS2b) der zweiten Unterbrechervorrichtung verbunden ist.

## Revendications

1. Dispositif d'alimentation de puissance de soudage comprenant :
un circuit redresseur (DR) qui redresse une alimentation en courant alternatif ;
un circuit de lissage (C) qui lisse une sortie du circuit redresseur (DR) en une tension continue ;
un circuit d'alimentation de puissance (PC) qui reçoit, comme entrée, la tension continue à partir du circuit de lissage (C) afin de produire une puissance de commande nécessaire au fonctionnement du dispositif d'alimentation de puissance de soudage ;
un circuit de conversion (CV) qui convertit la tension continue à partir du circuit de lissage (C) en une sortie du dispositif d'alimentation de puissance de soudage ;
et un circuit de commutation de mode (CH) destiné à commuter entre un mode de veille dans lequel le dispositif d'alimentation de puissance de soudage réduit la consommation en énergie et un mode actif dans lequel le dispositif d'alimentation de puissance de soudage sert à autoriser le soudage,
**caractérisé en ce que** le dispositif d'alimentation de puissance de soudage comprend, en outre :
un premier dispositif d'activation et de désactivation (MS1) qui établit et interrompt une liaison entre l'alimentation en courant alternatif et le circuit redresseur (DR) ;
une résistance de charge (RC) ;
un second dispositif d'activation et de désactivation (MS2) qui relie la résistance de charge (RC) au premier dispositif d'activation et de désactivation (MS1) ;
dans lequel, dans le but de commuter du mode de veille vers le mode actif, le circuit de commutation de mode (CH) maintient le premier dispositif d'activation et de désactivation (MS1) fermé pendant une première période de temps afin de permettre la charge du circuit de lissage (C) avec un courant limité par la résistance de charge (RC), et
après écoulement de la première période de temps, le circuit de commutation de mode (CH) ferme le second dispositif d'activation et de désactivation (MS2) et ouvre le premier dispositif d'activation et de désactivation (MS1) afin de déconnecter la résistance de charge (RC) du dispositif d'activation et de désactivation (MS1), de telle sorte que le mode est commuté vers le mode actif, et
dans le but de commuter du mode actif vers le mode de veille, le circuit de commutation de mode (CH) ouvre le second dispositif d'activation et de désactivation (MS2) afin d'arrêter la charge du circuit de lissage (C), de telle sorte que le mode est commuté vers le mode de veille.

2. Dispositif d'alimentation de puissance de soudage selon la revendication 1, comprenant, en outre, un générateur d'alimentation de puissance (AS) qui reçoit l'alimentation en courant alternatif en tant qu'entrée et fournit une puissance de commande requise pour le fonctionnement du circuit de commutation de mode (CH).

3. Dispositif d'alimentation de puissance de soudage selon la revendication 2, dans lequel le circuit de commutation de mode (CH) commute du mode de veille vers le mode actif en réponse à une activation d'un commutateur progressif (6) ou à une activation d'un commutateur de torche (4).

4. Dispositif d'alimentation de puissance de soudage selon la revendication 3, dans lequel le commutateur progressif (6) est agencé sur un dispositif de commande sans fil (RM).

5. Dispositif d'alimentation de puissance de soudage selon la revendication 4, dans lequel le dispositif de commande sans fil (RM) comporte un récepteur qui agit sur l'énergie à partir du générateur d'alimentation de puissance (AS).

6. Dispositif d'alimentation de puissance de soudage selon l'une quelconque des revendications 1 à 5, dans lequel le circuit de lissage (C) est raccordé à une résistance de décharge (RD1) qui est raccordée à un contact arrière du premier dispositif d'activation et de désactivation (MS1b) et à un contact arrière du second dispositif d'activation et de désactivation (MS2b).
